# EUROPEAN PATENT SPECIFICATION

(11) **EP 1 441 501 B1**
(45) Date of publication and mention of the grant of the patent: **08.03.2017**
(21) Application number: 04250156.9
(22) Date of filing: 14.01.2004
(51) Int. Cl.: H04N 1/00, G03G 15/00, H04N 1/32

(54) **Image forming apparatus and image forming method for making image output setting easily**
Bilderzeugungsvorrichtung und Bilderzeugungsverfahren für ein vereinfachte Bildausgabeeinstellung
Appareil de formation d'image et procédé de formation d'image pour un réglage de sortie d'images facile

(30) Priority: 15.01.2003 JP 2003007499; 13.01.2004 JP 2004005042
(43) Date of publication of application: 28.07.2004
(60) Divisional application: 05020386.8
(73) Proprietor: Ricoh Company, Ltd., Tokyo 143-8555 (JP)
(72) Inventor: Takumi Hirai, Ohnojou-shi Fukuoka (JP); Kunihiro Akiyoshi, Kurume-shi Fukuoka (JP)
(74) Representative: Leeming, John Gerard

(56) References cited:
- EP-A- 0 523 634
- EP-A- 0 601 364
- EP-A- 0 817 463
- EP-A- 0 896 256
- EP-A- 1 001 605
- US-A- 4 716 438
- US-A- 4 847 656
- US-A- 4 987 447
- US-A- 5 247 371
- US-A- 5 438 430
- US-A- 5 450 537
- US-A- 5 495 565
- US-A- 5 502 577
- US-A- 5 822 454
- US-B1- 6 249 361
- DATABASE EPODOC EUROPEAN PATENT OFFICE, THE HAGUE, NL; TW 425824 INVENTEC CORP 3 November 2001 (2001-11-03), SAI-JEN, FANG-FEI, SHUYEN-YUAN,YOU-CHING: "Image processing systemfor displaying, editing and printing digital image data." XP001091507

## Description

The present invention relates to an image forming apparatus such as a copier, a printer, a scanner, a facsimile and a compound machine. The present invention further relates to an information processing apparatus such as a personal computer and the like, and relates to an information processing method, an information processing program and a recording medium.

In recent years, compound machines are commercially available. The compound machine is a machine in which functions of copier, printer, scanner and facsimile are included. The compound machine includes hardware such as an image pickup part, a printing part and a communication part. In addition to that, the compound machine includes four pieces of software respectively corresponding to the copier, the printer, the scanner and the facsimile. By switching each piece of the software, the compound machine functions as the copier, the printer, the scanner and the facsimile.

The compound machine obtains image data from a document and can output the image data in various forms. For example, when the compound machine functions as a copier, the image data can be printed on a printing paper and the like. When the compound machine functions as a scanner or a facsimile, the image data can be sent to a computer or to a facsimile via a network. When performing tandem printing, the image data can be sent to another printer and the like via a cable. As for a mechanism on which documents are set for obtaining image data, an ADF (automatic document feeder) and a flatbed are generally used.

The compound machine can output the image data obtained from the document according to various image output settings. For example, the image data can be printed or sent after enlarging, reducing, dividing, page integrating, and/or density changing the image data according to the image output settings. In addition, for example, when the compound machine functions as a copier, the image data can be printed by specifying settings such as double-sided printing, multiple page printing, sort, stack, staple, and/or punch. In addition, for example, when the compound machine functions as a scanner or a facsimile, the image data can be sent to a destination as an attached image data file.

As a mechanism for making the image output settings, an operation panel is generally used. However, it is troublesome to make the image output settings on the operation panel. For example, it is troublesome to perform operations to make a complicated image output setting every time the setting is necessary.

US-A-5,438,430 discloses a reprographic method for producing an output document from an input document by scanning an instruction page containing an image processing command. The output document is produced from the scanned input document in accordance with the decoded image processing command.

US-A-4,987,447 discloses a reproduction apparatus in which job setup instructions are stored in memory and which are converted into a rasterised bitmap of machine readable indicia corresponding to the setup instructions. This rasterised bitmap is then used to produce a control sheet for future production runs.

EP 1 001 605 A discloses a tag-based user interface scheme for digitizing and processing hardcopy documents utilizing a sticker that includes a printed data code representative of a user identity code and a service code.

According to an aspect of the present invention, there is provided an image forming apparatus comprising:
a document setting part for setting documents;
an image input part for obtaining image data from documents set on said document setting part;
an image output part for printing or sending at least a part of the image data obtained from said documents;
a control file storing part for storing at least one control file including image output settings data;
a controller operable if a part of the image data obtained from a predetermined document included in said documents is a control image to retrieve a control file from said control file storing part corresponding to said control image and to control said image output part to output at least a part of said image data other than image data of said predetermined document in accordance with the image output settings data of the retrieved control file;
wherein the image forming apparatus prints a control image on a medium so as to generate said predetermined document on which the control image is drawn; and
wherein each control file uniquely corresponds to a control image and the control file corresponding to a control image can be obtained from information indicated on the control image;
characterized in that one of the control image data and the control file includes a user code, and if the user code of the control image data or the control file and a user code input into the image forming apparatus separately from the control image data are the same, the image forming apparatus outputs at least a part of said image data other than image data of said predetermined document in accordance with the image output settings data.

According to a further aspect of the present invention, there is provided an image forming method using an image forming apparatus, the method comprising:
setting documents to a document setting part of said image forming apparatus;
obtaining image data from documents set on said document setting part;
printing or sending at least a part of the image data obtained from said documents;
storing at least one control file including image output settings data; and
if a part of the image data obtained from a predetermined document included in said documents is a control image, retrieving a control file corresponding to said control image and outputting at least a part of said image data other than image data of said predetermined document in accordance with the image output settings data of the retrieved control file;
wherein the image forming apparatus prints a control image on a medium so as to generate said predetermined document on which the control image is drawn; and
wherein each control file uniquely corresponds to a control image and the control file corresponding to a control image can be obtained from information indicated on the control image;
characterized in that one of the control image data and the control file includes a user code, and if the user code of the control image data and a user code input into the image forming apparatus separately from the control image data are the same, outputting at least a part of said image data other than image data of said predetermined document in accordance with the image output settings data.

An object of the present invention is to ease operations for making the image output settings on an image forming apparatus that obtains image data from a document, and prints the image data or sends the image data to a destination.

According to the present invention, the operation for making an image output setting in the image forming apparatus can be simplified, since the operation is simply to set the predetermined document.

Other objects, features and advantages of the present invention will become more apparent from the
following detailed description when read in conjunction with the accompanying drawings, in which:
Fig.1 shows a compound machine according to an embodiment of the present invention;
Fig.2 shows a hardware configuration of the compound machine shown in Fig.1;
Fig.3 is an external view of the compound machine shown in Fig.1;
Fig.4 shows an operation panel;
Fig.5 shows a control document on which a control image is drawn;
Fig.6 is a flowchart according to the first embodiment;
Fig.7 shows a data format of a control file according to the first embodiment;
Fig.8 is a flowchart for simplified OMR process;
Fig.9 is a flowchart for another example according to the first embodiment;
Fig.10 shows a data format of a control file according to the first embodiment;
Fig.11 is a flowchart according to the first embodiment;
Fig.12 shows an editing screen according to the third embodiment;
Fig.13 is a flowchart according to the third embodiment;
Fig.14 shows a form document;
Fig.15 shows a control document on which a control image and a description image are drawn;
Fig.16 shows a personal computer according to an embodiment of the present invention.

In the following, embodiments of the present invention are described with reference to figures.

### (1) Compound machine

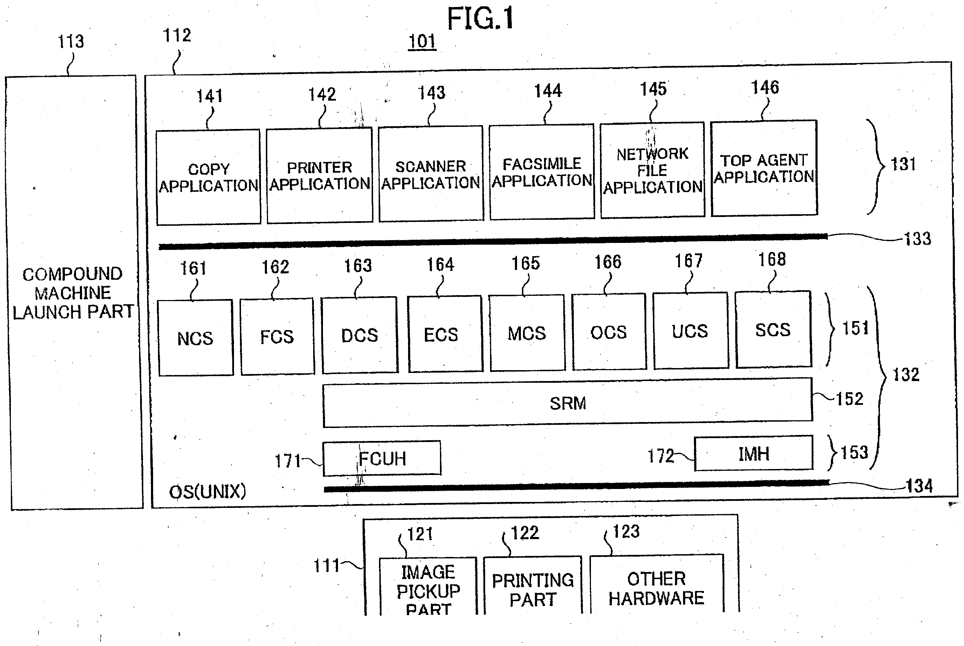

Fig.1 shows a compound machine 101 which is an example of an embodiment of the present invention. The compound machine 101 shown in Fig.1 includes various hardware 111, various software 112, and a compound machine launch part 113. By these components, the compound machine 101 of Fig.1 functions as a copier, a printer, a scanner and a facsimile and the like.

The hardware 111 includes an image pickup part 121, a printing part 122 and other hardware 123. The image pickup part 121 is hardware for obtaining image data from a document, and is used for the compound machine to function as a copier, a scanner or a facsimile. The image pickup part 121 may be for black and while images or for color images. In addition, the image pickup part 121 includes a document setting part and the like as a mechanism on which documents are set.

The printing part 122 is hardware for printing image data on a printing paper and the like, and is used for the compound machine to function as a copier, a printer or a facsimile. The printing part 122 may be for black and while images or for color images. The printing part 122 adopts electrophotographic technique and includes a photosensitive material, a charging part, an exposure part, a developing machine, a transferring part, a fixing part and the like. The printing part 122 includes a paper feed part, a paper ejecting part, a paper transfer mechanism, which are mechanisms for printing papers and the like.

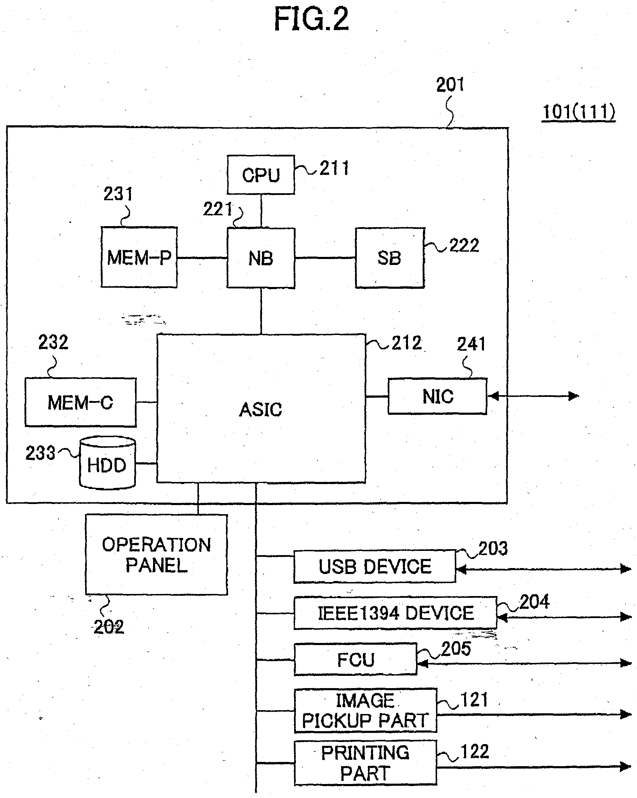

Other hardware 123 will be described with reference to Fig.2.

The software 112 includes various applications 131 and a platform 132. Programs of the applications 131 and the platform 132 are executed as processes concurrently under an operating system such as UNIX. The applications 131 are software for performing information processing for realizing a copier capability, a printer capability, a scanner capability, a facsimile capability and the like. The applications 131 include a copy application 141 for copying, a printer application 142 for printing, a scanner application 143 for scanner, a facsimile application for faxing, a network file application 145 for network files, and a top agent application 146 for performing the after-mentioned top agent capability.

The platform 132 is for performing information processing on process requests sent from the applications 131 to the hardware 111. The platform 132 uses application program interfaces (API) 133 (that are predetermined functions) for receiving process requests from the applications 131. The platform 131 uses engine interfaces (ENI) 134 (that are predetermined functions) for sending process requests to hardware 111. The platform 132 includes various control services 151, a system resource manager 152 and various handlers 153.

The control service 151 interprets the process request from the application 131 to the hardware 111, and issues a resource obtaining request to the hardware 111 according to the result of interpretation. The control service 151 includes a network control service (NCS) 161, a facsimile control service (FCS) 162, a delivery control service (DCS) 163, an engine control service (ECS) 164, a memory control service (MCS) 165, an operation panel control service (OCS) 166, a user directory control service (UCS) 167, and a system control service (SCS) 168.

The process of NCS 161 provides APIs for performing data communication via a network. The process of the FCS 162 provides APIs for image data communication, image data receiving, image data printing and the like as functions of a facsimile. The process of the DCS 163 controls delivery of document data stored in the compound machine. The process of ECS 164 controls engine parts such as the image pickup part 121 and the printing part 122 and the like. The process of the MCS 165 performs control of memories and the hard disk drive relating to image data storing and image data processing and the like. The process of the OCS 166 performs control on the operation panel. The process of the UCS 167 performs control on management of user information. The process of the SCS 168 performs controls on the management of the system.

The system resource manager (SRM) 152 arbitrates requests for acquiring the hardware resources, and issues process requests to the hardware 111 according to the arbitration result. More specifically, the process of the SRM 152 determines whether requested portion of the hardware is available (whether the request and another request do not compete for the portion of the hardware). If it is available, the process of the SRM 152 sends information indicating that is available to the control service 151. Further, the process of the SRM 152 makes a schedule for using requested hardware, and the process of the SRM 152 performs a control for issuing process requests for the hardware according to the schedule.

The handler 153 manages the hardware 111 according to the above-mentioned arbitration result. The handler 153 includes a facsimile control unit handler (FCUH) 171 and an image memory handler (IMH) 172. The FCUH 171 manages a facsimile control unit. IMH 172 allocates a memory area to each process and manages the allocated memory.

The compound machine launch part 113 is initially executed when the compound machine is turned on. Accordingly, the OS such as UNIX is launched, so that the applications 131 and the platform 132 are launched. These programs are stored in the hard disk drive, and the programs are loaded from the hard disk into a memory when executed.

Fig.2 shows the hardware 111 of the compound machine 101. The hardware 111 includes a controller 201, an operation panel 202, a USB device 203, an IEEE 1394 device 204, a facsimile control unit (FCU) 205, an image pickup part 121, and a printing part 122. The components other than the image pickup part 121 and the printing part 122 correspond to the other hardware 123 in Fig.1.

The controller 201 includes a CPU 211, an ASIC 212, a NB (north bridge) 221, a SB (south bridge) 222, a MEM-P (system memory) 231, a MEM-C (local memory) 232, a HDD(hard disk drive) 233, and NIC (network interface controller) 241.

The CPU 211 executes various kinds of information processing. For example, the CPU 211 executes the applications 131 and the platform 132 concurrently as processes-under control by the OS. The ASIC 212 is an IC for image data processing. The NB 221 is a bridge for connecting the CPU 211 and the ASIC 212. The SB 222 is a bridge for connecting the NB 221 and peripheral apparatuses and the like.

The MEM-P 231 is a memory being connected to the NB 221. The MEM-C 232 is a memory being connected to the ASIC 212. The HDD 233 is a storage connected to the ASIC 212. The HDD 233 is used for storing image data document data, programs, font data, form data and the like. The NIC 241 is connected to the ASIC 212, and is used for data communication using MAC address and the like via a network.

The operation panel 202 is an operation part for inputting data into the compound machine 101 by the operator. The operation panel 202 is also a display part for outputting data. The operation panel 202 is connected to the ASIC 212.

The USB device 203 is used for connecting devices in conformity with the USB standard. The IEEE1394 device 204 is used for connecting devices in conformity with the IEEE1394 standard. These devices are used for performing tandem printing and the like. The USB device 203, the IEEE1394 device 204, the facsimile control unit 205, the image pickup part 121 and the printing part 122 are connected to the ASIC 212 via the PCI bus.

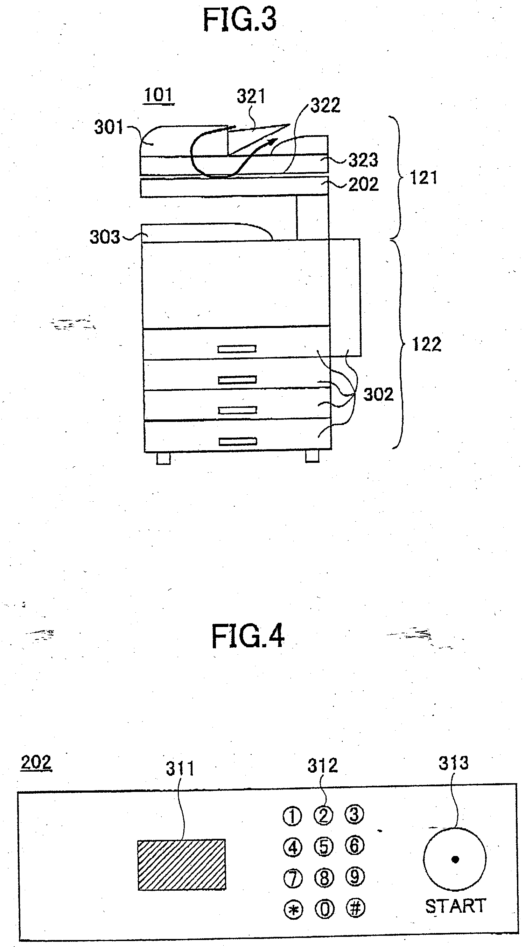

Fig.3 shows an external view of the compound machine 101 of Fig.1. Fig.3 shows the position of the image pickup part 121, the position of the printing part 122, and the position of the operation panel 202. Fig.3 further shows a document setting part 301 on which documents are set, a paper feeding part 302 for paper feeding, and a paper ejecting part 303 for ejecting printing papers. The document setting part 301 is a component of the image pickup part 121, and the paper feeding part 302 and the paper ejecting part 303 are components of the printing part 112.

As shown in Fig.4, the operation panel 202 includes a touch panel 311, a number button 312 and a start button 313. When a document is set on the document setting part 301 and the start button 313 is pushed, the compound machine 101 obtains image data of the document by using the image pickup part 121. When functioning as a copier, the compound machine 101 prints the image data on a printing paper by using the printing part 122. When functioning as a scanner and a facsimile, the compound machine sends the image data to another electronic device via the NIC 241 and via a network. When performing tandem printing, the compound machine 101 sends the image data to another electronic device via a cable and the like by using the USB device 203 and the IEEE1394 device 204.

The document setting part 301 includes an ADF (automatic document feeder) 321, a flatbed 322 and a flatbed cover 323.

The ADF 321 is provided on the top surface of the flatboat cover 323. The ADF can simultaneously set a plurality of documents that are stacked. When the documents are set in the ADF 321, by pushing the start button 313, the compound machine 101 obtains image data from the documents by using the image pickup part 121. More specifically, when the start button 313 is pushed, the ADF 321 conveys each document in turn along a route shown by an arrow in Fig.3. The image pickup part 121 obtains image data of the each document in turn.

The flatbed 322 appears by opening the flatbed cover 323. The flatbed 322 is formed by a transparent material such as glass. The document is set on the flatbed 322 in a downward direction. When the document is set on the flatbed 322, the compound machine obtains image data of the document by using the image pickup part 121 when the start button 313 is pushed. More specifically, when the start button 313 is pushed, the image pickup part 121 obtains the image data from the document opposite via the flatbed 322.

### (First embodiment)

A first embodiment of the compound machine 101 shown in Fig.1 is described. When a plurality of pages of documents are set simultaneously on the ADF 321, the compound machine 101 of Fig.1 obtains image data of each document one by one by using the image pickup part 121 if the start button 313 is pushed.

If the image data that is obtained first is control image data, the compound machine 101 prints or sends image data obtained after the first image data by using the printing part 122 or the NIC 241 according to an image output setting corresponding to the control image data.

For example, by functioning as a copier, a scanner, a facsimile and the like, the compound machine 101 enlarges, reduces, divides, integrates, and/or changes density for each piece of image data obtained after the first image data. Then, the compound machine 101 prints or sends the image data by using the printing part 122 or the NIC 241. In addition, for example, the compound machine functions as a copier, and prints each piece of image data obtained after the first image data by specifying double-sided printing, multiple page printing, sort, stack, staple, punch and the like. In addition, for example, the compound machine 101 functions as a scanner or a facsimile, and sends each piece of image data obtained after the first image data by specifying attached image data by using the NIC 241.

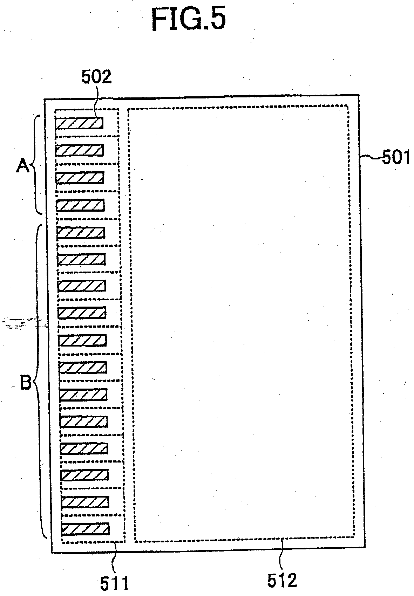

The control image data is image data obtained from a control document. The control document is a document on which a control image for controlling the compound machine 101 is drawn. Fig.5 shows an example of the control document 501 on which the control image 502 is drawn.

As shown in Fig.5, the control document 501 includes a control image drawing region 511 and a free drawing region 512. The control image drawing region 511 is a region on which a control image 502 is drawn, and the free drawing region 512 is a region for freely drawing memos and comments and the like. The free drawing region 512 may not be provided. However, the control document 501 becomes user-friendly by providing the free drawing region 512.

As shown in Fig.5, the control image 502 may include 16 black bars, so that the control image 502 can have 16 bits information that corresponds to an image output setting. The image output setting is, for example, for instructing the compound machine to function as a copier and to perform double-sided printing by integrating two pages into one page for each piece of the image data obtained after the first image data, and, to punch the left side of the printed papers.

The 16 bit information may include the image output setting information. Alternatively, the 16 bit information may correspond to information for identifying an after-mentioned control file that includes image output setting data. In the following description, first, a case in which the 16 bit information corresponds to information for identifying the control file will be described. Next, a case in which the 16 bit information includes the image output setting information will be described.

In Fig.5, for improving detection accuracy for detecting presence or absence of each of the 16 black bars, the control image 502 may include two black bars outside of the 16 black bars as guiding marks.
The number of the black bars is not limited to 16.

As mentioned above, for making the image output setting, the user puts the control document on the ADF 321, and operates the compound machine (push the start button 313) to obtain the control image data from the control document. Accordingly, the operation for making the image output setting in the compound machine can be easily performed.

Further, for making an image output setting so as to make the compound machine to print or send image data according to the image output setting, the user sets the control document with other documents on the ADF 321, in which the control document and the other documents are stacked, then, the user performs an operation (pushes the start button 313) for instructing the compound machine to obtain the control image data and other image data from the control document and from the other documents. Accordingly, the operation for obtaining the control image data from the control document and the operation for obtaining other image data from other documents can be performed at the same time, so that easy operation can be achieved.

If the image data that is obtained first is the control image data, the compound machine 101 of Fig.1 may always perform an image formation process according to the image output setting that corresponds to the control image data. Alternatively, the compound machine 101 may perform the operation corresponding to the image output setting only when the compound machine 101 is in a predetermined mode that is set from the operation panel 202. If the image data obtained first is not the control image data, the compound machine 101 performs an image formation process as usual irrespective of the mode. Alternatively, if the above-mentioned mode is set but the image data obtained first is not the control image data, the compound machine 101 may output an error message.

When the ADF 321 conveys the documents in turn one by one from the top of the documents, image data that is obtained from a document that is read first becomes the image data that is obtained first. Therefore, the control document needs to be set as a top of the documents in the ADF 321.

In a case where the ADF 321 conveys the documents in turn from the bottom of the documents, a document set as the bottom of the documents is obtained first. Therefore, the control document is set as the bottom of the documents. In either case, since the control image data obtained from the control document is image data that is obtained first, the control document can be referred to as "top agent".

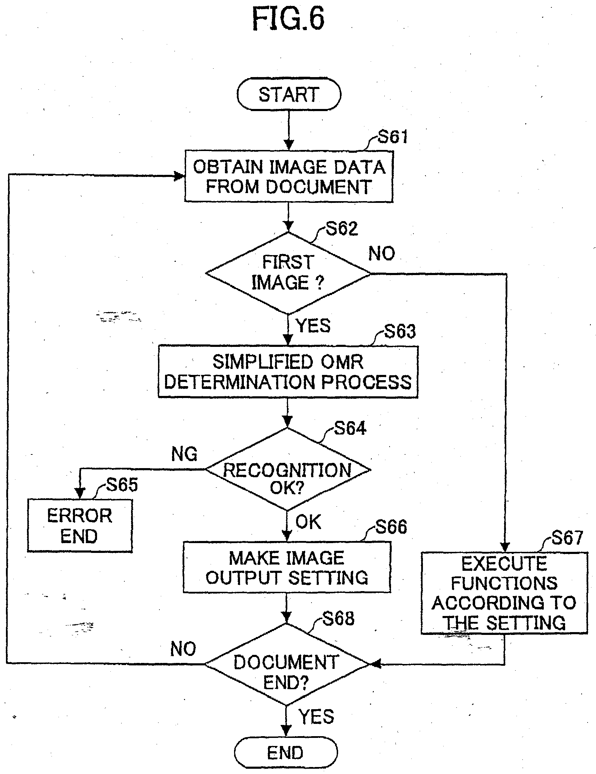

Details of operations of the compound machine 101 according to the first embodiment are described with reference to a flowchart of Fig.6.

First, as a preparation to perform the process shown in Fig.6, the user simultaneously sets the control document with other documents on the ADF 321, and pushes the start button 313. For realizing the operation of Fig.6, the control document and the other documents need to exist on the ADF 321 at least at the time when the start button 313 is pushed. Thus, the user may set the control document first, then, set other documents before pushing the start button 313. Alternatively, the user may set other documents first, then, set the control document before pushing the start button 313.

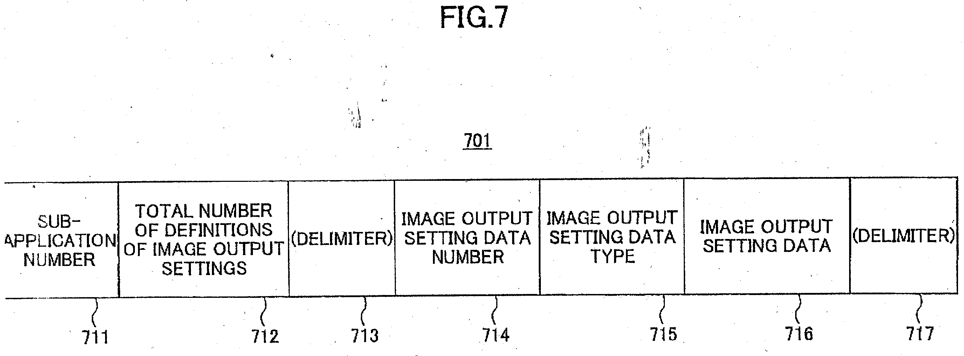

The HDD 233 of the compound machine 101 stores a control file including the image output setting data beforehand. Fig.7 shows an example of the data format of the control file 701. As shown in Fig.7, the control file 701 includes a sub-application number 711, a total number of definitions of image output settings 712, a delimiter 713, an image output setting data number 714, an image output setting data type 715, image output setting data and a delimiter 717. The control file 701 is a text file in this example.

For example, the image output setting data 716 includes information to control the compound machine 101 to function as a copier and to perform double-sided printing by integrating two pages into one page for each piece of the image data obtained after the first image data, and, to punch the left side of the printed papers. The image output setting data type 715 includes a data type of the image output setting data 716 (for example, JOB-MODE structure data, bitmap data, address book and the like, in which "JOB-MODE structure" means parameter structure for engine control). The image output setting data number 714 is an identification number (12 bits, for example) of the image output setting data 716. The total number of definitions of image output setting data 712 includes the total number of definitions of image output setting data 716. The sub-application number 711 includes an identification number (4 bits) of a sub-application (copy application 141 and the like) relating to the image output setting data 716.

In this embodiment, the control image 502 includes the sub-application number 711 by using presence or absence of the four black bars at the region A, and includes the image output setting data number 714 by using presence or absence of the twelve black bars at the region B. That is, a control file 701 uniquely corresponds to a control image 502 in this example, so that a control file corresponding to a control image can be obtained by using the image output setting data number indicated by the control image. In the example of Fig.5, the part A may not be provided. In such a case, the sub-application number can be obtained from the control file that can be obtained from the image output setting data number.

In the flowchart shown in Fig.6, when a plurality of stacked documents are simultaneously set on the ADF 321, the compound machine 101 obtains image data of each document one by one by using the image pickup part 12 upon detecting push of the start button 313 in step S61. The image data are stored in the MEM-P 231 or the MEM-C 232. Control for the image pickup part 121 and the ADF 321 is performed by the process of the ECS 164. Control for the start button 313 is performed by the process of the OCS 168. Control for the MEM-P 231 and the MEM-C 232 is performed by the process of the MCS 165.

The compound machine 101 determines whether image data that is obtained is the first control image data in step S62. If the image data is one obtained first, a simplified OMR (optical mark recognition) process is performed on the image data of the first document, and the image data is recognized in steps S63 and S64. The process will be described in detail in the following.

The compound machine 101 stores the firstly obtained image data as a RAW file (which is an inside data file of a proprietary format), wherein the image data is obtained under a JOB-MODE structure member settings: start page : 1, end page : 1, resolution 200dpi, non-compression. Next, the image data obtained first is rotated as necessary so that the image can be analyzed. The vertical image data shown in Fig.5 is not rotated, but a horizontally directed image is rotated by 90 degree. Next, the compound machine 101 converts the RAW file into FFS file. The file conversion process is performed by using an image library (which is an image process function library). Next, the simplified OMR process (that can be also referred to as "pseudo-OMR process") is performed on a region (region corresponding to control image drawing region 511 in Fig.5) in the firstly obtained image data so as to recognize information represented by presence or absence of each black bar. The analysis result is stored in the MEM-P 231 or in the MEM-C 232. The control for the MEM-P 231 and the MEM-C 232 is performed by the process of the MCS 165. The process in steps S62-S64 are controlled by the top agent application 146.

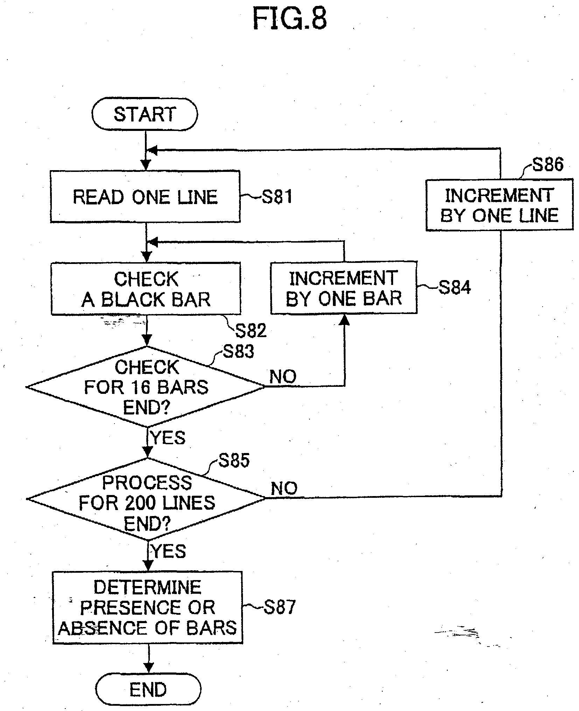

In the following, the simplified OMR process is described in detail with reference to Fig.8. First, one line of the control image is read in step S81. The direction of the line is vertical in Fig.5. Next, the compound machine checks presence or absence for one black bar in the 16 black bars for the line in step S82. Then, the process of step S82 is performed for 16 bars in steps 583 and S84, and the process of steps S81-S83 is performed for 200 lines (steps S85 and S86). Finally, presence or absence for each of the 16 black bars are determined in step S87. In this embodiment, a bar is determined to be present if the bar is detected in no less than 100 lines among the 200 lines. If the recognition fails, an error message is output (in step S65 in Fig.6).

Since this simplified OMR process does not require a high degree of accuracy for recognizing images, the process can be performed speedily. In addition, since the simplified OMR process does not require dedicated software such as OCR and barcode recognition, the cost for the simplified OMR can be low.

The compound machine makes the image output setting corresponding to the control image in the firstly obtained document in step S66 in Fig.6. This process is described in detail in the following.

The compound machine 101 determines the 16 bit information from the presence or absence of the 16 black bars. Then, the compound machine 101 obtains image output setting data from the control file 701 (stored in HDD 233) that corresponds to the 16 bit information. Then, the compound machine 101 makes the setting of the compound machine 101 according to the image output setting data. The process of step S66 is controlled by the top agent application 146.

The compound machine 101 prints image data obtained after the first image data according to the image output setting by using the printing part 122 or sends the image data by using the NIC 241 (steps S68, S62, S67). For example, the compound machine 101 functions as a copier and performs double-sided printing by integrating two pages into one page for each piece of the image data obtained after the first image data, and, punches the left side of the printed papers. The control for the printing part 122 is performed by the process of the ECS 164, and APIs used for data communication by the NIC 241 is provided by the process of the NCS 161. The compound machine 101 functions as a copier by using the copy application 141, the compound machine 101 functions as a scanner by using the scanner application 143, and the compound machine 101 functions as a facsimile by using the facsimile application 144. When the compound machine 101 functions as the facsimile, the process of the FCS 162 is used further.

In the above-mentioned embodiment, the control image includes data (sub-application number) for determining a function of the compound machine 101. Alternatively, instead of using the control image, the function can be set by the user from the operation panel 202. In such a case, the user can set the function as "copier" for example.

In the flowchart of Fig.6, the compound machine 101 performs the process of step S67 while at least a document remains on the ADF 321. After all of the documents are read, the process ends.

In the first embodiment, a case where the firstly obtained image data is the control image data is described. However, the present invention is also applicable to a case where image data obtained second or later is the control image data. In addition, in the first embodiment, image data obtained from documents that are set simultaneously are processed under the image output setting. However, the present invention is also applicable to image data obtained from documents that are set during a duration in time instead of simultaneously.

In addition to making a setting by using the firstly obtained control document, a further setting can be made by using a document that is obtained second or later. For example, after making a setting of a function (referred to as "scan to mail"), by using a first control document, for sending an image obtained by scanning a document to a destination, address information of the destination is obtained from a document that is read second.

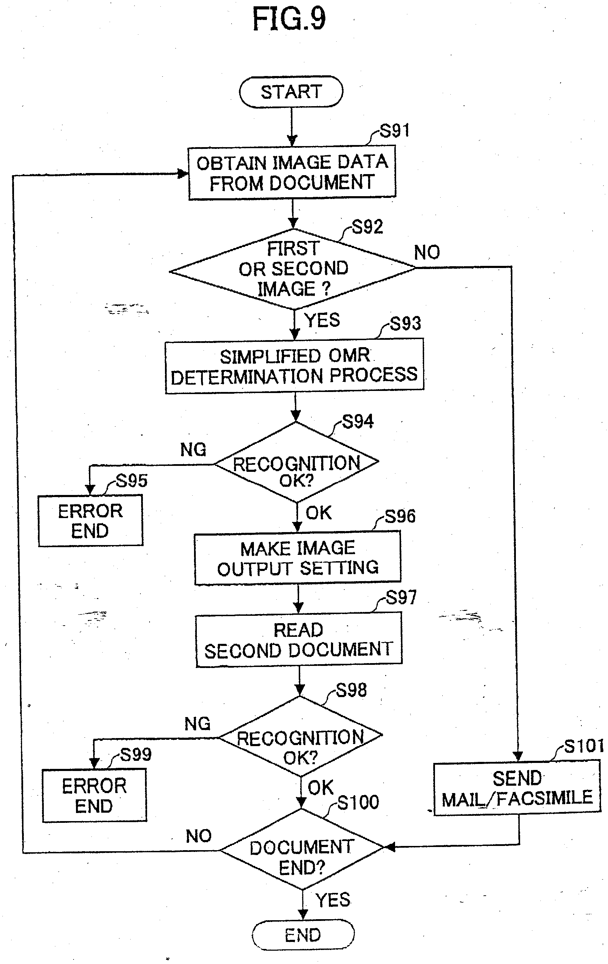

Fig.9 shows a flowchart for performing the above-mentioned control. In the process shown in Fig.9, in the same way as the process shown in Fig.6, control image data is obtained from the first document, and an image output setting data number is recognized by the simplified OMR process, so that image output setting data is obtained from a control file corresponding to the image output setting data number and the compound machine 101 makes the image output setting (steps S91-S96). The setting is for a function of "scan to mail" or "scan to FAX". After that, a second control document is read, and the control image of the second control document is recognized in steps S97 and S98, so that the compound machine 101 sends image data of each document read after the second document to the address or to the FAX number in step S101. After all of documents are read, the process ends.

In the process using the control document described in the first embodiment, control by using a user code (which can be also referred to as "user ID") is performed.

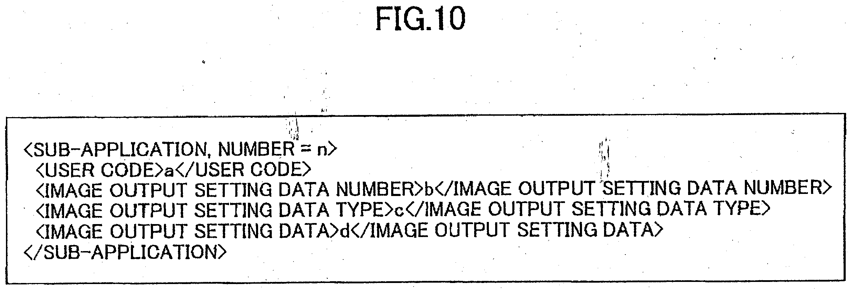

Fig.10 shows an example of a control file including a user code. This control file is prepared in conformity with XML (Extensible Markup Language).

As shown in Fig.10, an information item of the user code is included. The control file shown in Fig.7 may also include a user code. The meaning of each information item in Fig.10 is the same as corresponding one of Fig.7.

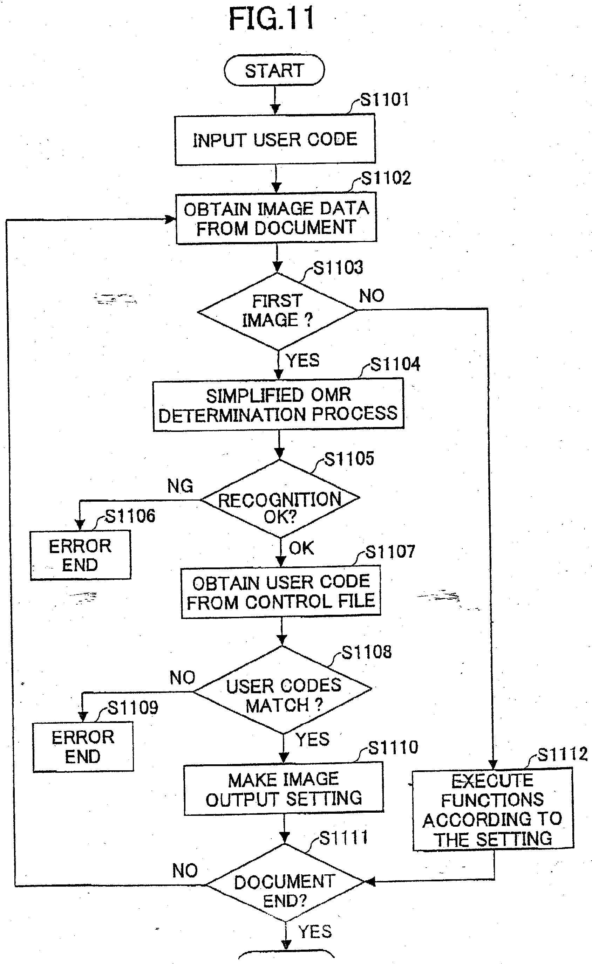

By using the user code, for example, personal identification can be authenticated for a user who use a control document. That is, whether the user is authorized to use the control document can be checked. Fig.11 shows a flowchart in which a control file including a user code is used. In Fig.11, a user code is input, and the input user code and a user code included in the control file are compared to check whether they are the same. This is the different point between the process of Fig.6 and the process of Fig.11.

In Fig.11, the user inputs a user code by using ten keys of the operation panel in step S1101. Instead of using the ten keys, an IC card storing the user code can be used in which the user code is read from the IC card into the compound machine 101. In addition, the compound machine 101 can be configured to read the user code from a mobile terminal and the like.

The compound machine 101 recognizes an image output setting data number included in the control document so as to obtain a control file corresponding to the number in the same way as the process shown in Fig.6. Then, the compound machine 101 obtains a user code included in the file in step S1107.

Then, the compound machine 101 checks whether the user code in the control file and the initially input user code are the same in step S1108. If they are not the same, an error is displayed in step S1109. If they are the same, the compound machine 101 makes the image output setting according to the image output setting data in step S1110. After that, the same process as corresponding process in Fig.6 is performed.

Instead of initially inputting the user code, the compound machine 101 may prompt for a user code after the recognition process of the control image. Then, the compound machine compares the user codes.

In addition, instead of inputting the user code by using the ten key and the like, user code information can be included in the control image data, so that a user code obtained from the control image data can be compared with the user code included in the control file.

The usage of the user code is not limited to one mentioned above. For example, if there are a plurality of control files having the same image output setting data number and a control file is uniquely specified from the plurality of control files by using a user code in addition to the image output setting data number, the user code can be used for specifying a control file.

In addition, in a case where use of a control file is permitted to persons of a group, the control file may include a plurality of user codes of the persons. Accordingly, a usage of the control document can be realized in which the control document can be used only when a user code of one of persons of the group is input.

In addition, the control file shown in Fig. 10 may include "password" as an information item. In this case, for example, after the step S1108 in Fig. 11, the compound machine 101 may prompt for a password, and checks whether the input password and a password included in the control file are the same. If they are the same, the compound machine 101 continues further processes.

### (Second embodiment)

Next, a second embodiment of the compound machine 101 is described.

In the compound machine 101, a document is set face down on the flatbed 322 and other documents
are set on the ADF 321. In this state, when a start button 321 is pushed, the compound machine 101 obtains image data from the document set on the flatbed 322 first. Next, the compound machine 101 obtains image data from each document set on the ADF 321. Thus, the image data obtained from the document on the flatbed 322 becomes the first image data, and the image data obtained from documents on the ADF 321 becomes image data obtained after the first image data.

The compound machine 101 obtains each piece of image data in turn from each document set on the flatbed 322 and the ADF 321. If image data that is obtained first is the control image data, the compound machine 101 prints image data obtained after the first image data or sends the image data to a destination according to an image output setting corresponding to the control image data. That is, if image data obtained from the document set on the flatbed 322 is the control image data, the compound machine 101 prints or sends each piece of image data obtained from each document set on the ADF 321 according to an image output setting corresponding to the control image data. Thus, the same process as that described in the first embodiment can be performed.

As mentioned above, according to the second embodiment, for making the image output setting in the compound machine 101, the user puts the control document on the flatbed 322, and operates the compound machine (push the start button 313) to obtain the control image data from the control document. Accordingly, the operation for making the image output setting in the compound machine can be easily performed.

Further, for making an image output setting so as to make the compound machine to print or send image data according to the image output setting, the user sets the control document on the flatbed 322 and sets other documents on the ADF 321, then, the user performs an operation (pushes the start button 313) for instructing the compound machine to obtain the control image data and other image data from the control document and from the other documents. Accordingly, the operation for obtaining the control image data from the control document and the operation for obtaining other image data from other documents can be performed at the same time, so that easy operation can be achieved.

The second embodiment is different from the first embodiment in that the control
document that is read first is put on the flatbed 322 instead of the ADF 321. However, substantial processes of the second embodiment are the same as those of the first embodiment.

### (Third embodiment)

In the following, a third embodiment of the compound machine 101 is described. In the third embodiment, an example of a method for making the control document and the control file is described.

As shown in Fig.2, the compound machine 101 includes the operation panel 202. The operation panel 202 is the hardware (operation part) for receiving data input by the operator, and the hardware (display part) for outputting data to the operator.

As shown in Fig.4, the operation panel 202 includes a touch panel 311. The touch panel 311 is the hardware for inputting data by the operator by using touch operation, and is the hardware for displaying an image to the operator.

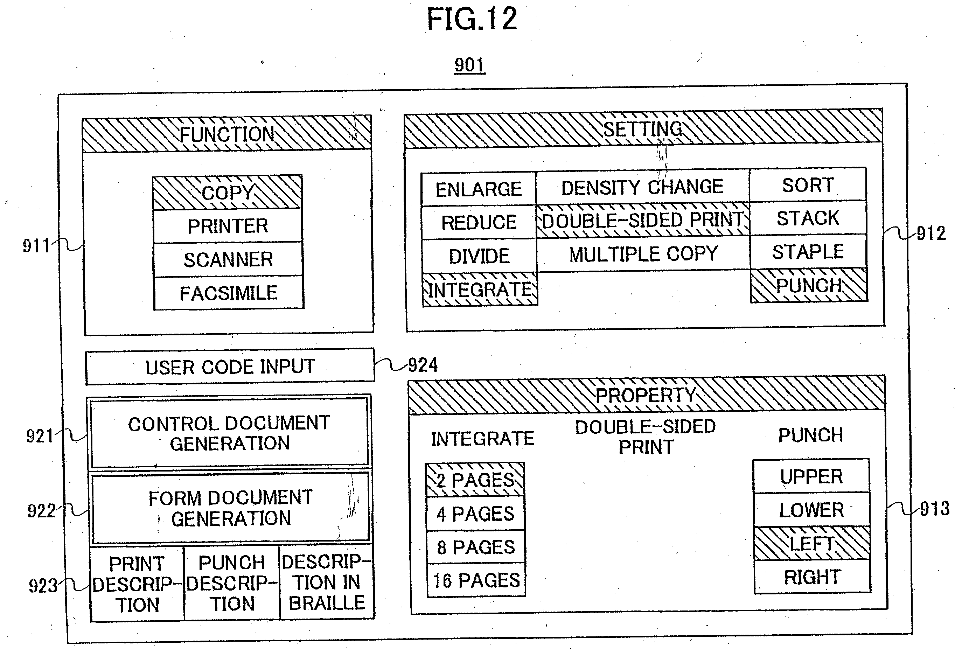

The compound machine 101 can display an editing screen on the touch panel 311. The editing screen provides a user interface for editing the image output setting. Fig.12 shows an example of the editing screen 901. The editing screen 901 includes a function window 911, a setting window 912, a property window 913, a control document generation button 921, a form document generation button 922, a description button 923 and a user code input button 924.

The function window 911 includes function buttons on which "copy", "printer", "scanner", and "facsimile" are drawn. When a function button is touched, the function button is turned on so that a function corresponding to the function button is included in the image output setting to be generated. In Fig.12, "copy button" is on. ON/OFF information for each function button is stored in the MEM-P 231 or the MEM-C 232.

The setting window 912 includes setting buttons on which "enlarge", "reduce", "divide", "integrate", "density change", "double-sided print", "multiple copy", "sort", "stack", "staple", "punch" are drawn. When a setting button is touched, the setting button is turned on so that a setting corresponding to the setting button is included in, the image output setting to be generated. In Fig.12, "integrate button", "double-sided print button", and "punch button" are on. ON/OFF information for each function button is stored in the MEM-P 231 or the MEM-C 232.

On the property window 913, properties of settings each corresponding to a setting button that is ON are displayed. In Fig.12, "integrate", "double-sided print" and "punch" are displayed in the property window 913. In addition, property buttons of each setting are shown. In Fig.12, the setting "integrate" is shown with property buttons "2 pages", "4 pages", "8 pages" and "16 pages". The setting "punch" is shown with property buttons "upper", "lower", "right" and "left". If a property button is touched, the property button is turned on, so that the property corresponding to the property button is included in the image output setting. In Fig.12, the "2 page integrate button" and "left punch button" are on. ON/OFF information for each property button is stored in the MEM-P 231 or the MEM-C 232.

As mentioned above, by turning the function button, the setting button and/or the property button on, the image output setting can be edited. That is, if a function button, a setting button and a property button are turned on, a function, a setting and a property corresponding to the function button, the setting button and the property button respectively are included in the image output setting.

In addition, by touching the user code input button, the user code can be input. The input user code is included in a control file. The number of the user codes to be input is not limited to one, and a plurality of user codes can be input and included in a control file.

The image output setting edited in the above-mentioned way is stored in a control file as image output setting data. The image output setting data number in the control file is automatically assigned to the control file uniquely. Alternatively, the image output setting data number can be input by the user.

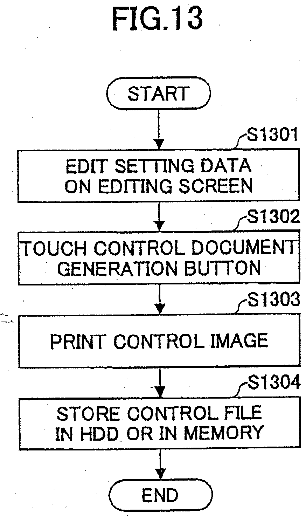

Processes from editing to generation of control document and control file are performed according to a flowchart in Fig.13.

First, the image output setting is edited by using the editing screen of Fig.12 in step S1301. After the editing, when the control document generation button 921 is touched, an image output setting data number corresponding to the edited setting is assigned and information corresponding to the number is printed on a paper as a control image, so that the control document is generated in steps S1302 and S1303. Further, the control file that includes the image output setting data, the image output setting data number, the user code and the like is stored in the HDD 233 or a memory in step S1304. In the above process, step S1303 may be performed after step S1304.

In the unclaimed example, where the control file is not used, when the control document generation button 921 is touched, information representing the edited image output setting is printed on a paper as the control image, so that the control document is generated.

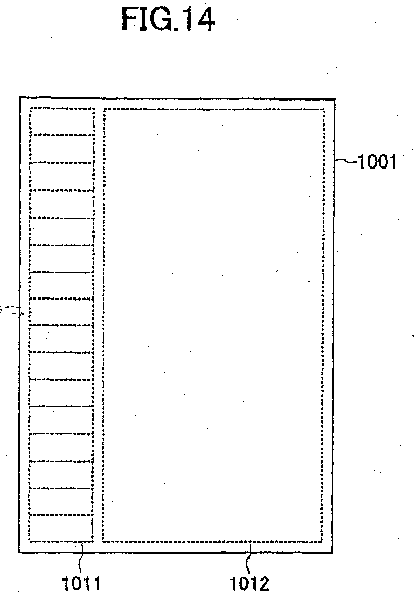

In the editing screen of Fig.12, when the form document generation button 922 is touched, form image data stored in the HDD 233 is printed by the printing part 122 so that a form document is generated. The form document is used for producing a handwritten control document. Fig.14 shows the form document 1001. The form document 1001 shown in Fig.14 is a document for manually producing the control document 501 shown in Fig.5. The form document 1001 includes a boundary line 1011 indicating a control image drawing region 511, and a boundary line 1012 indicating a free drawing region 512. The user draws black bars, comments and the like by using the dotted lines as a guideline. Accordingly, the user can manually produce the control document on which a control image corresponding to a desired image output setting is drawn.

The form image data is image data used for generating the form document by printing. The model image data is stored in the HDD 233.

The description button 923 includes a print button, a punch button and a braille button. When one of the print button, the punch button and the braille button is touched, the button is turned on. ON/OFF information for each button is stored in the MEM-P 231 or the MEM-C 232.

If the control document generation button 921 is touched in a state that the print button is on, the compound machine 101 prints description image data corresponding to the edited image output setting in addition to the control image data, so that the compound machine 101 generates a control document that includes the control image and the description image.

If the control document generation button 921 is touched in a state that the punch button is on, the compound machine 101 prints the control image data corresponding to the edited image output setting by using the printing part 122, and inscribes description inscribing data corresponding to the image output setting by using the printing part 122, so that the compound machine 101 generates a control document that includes the control image and punch holes as description inscriptions.

If the control document generation button 921 is touched in a state that the braille button is on, the compound machine 101 prints the control image data corresponding to the edited image output setting by using the printing part 122, and inscribes description braille data corresponding to the image output setting by using the printing part 122, so that the compound machine 101 generates a control document that includes the control image and braille inscriptions as description inscriptions.

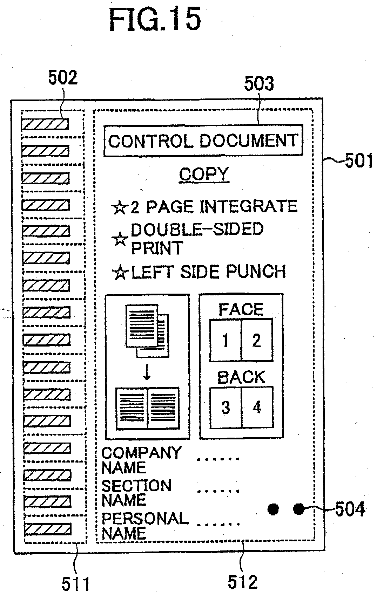

Fig.15 shows a control document 501 on which the control image data is printed and the description image data is printed. The control document 501 in Fig.15 includes a control image drawing region 511 and a free drawing region 512 like the control document 501 in Fig.5. The control image drawing region 511 is a region on which a control image 502 is drawn. In addition, a description image 503 is drawn on the free drawing region 512.

In Fig.15, the control image 502 corresponds to an image output setting in which the compound machine function as a copier and performs double-sided printing by integrating two pages into one page for each piece of image data obtained after the first image data, and, punches the left side of the printed papers. The description image 503 describes the image output setting by using characters and figures.

The description image data may be included in the control file 701 for associating the control image 502 with the corresponding description image 503, and the data is stored in the HDD 233.

In the same way as generating the control document 501 by printing the description image data, the control document on which punch holes or the braille data are inscribed can be generated. Two punched holes are inscribed in the free drawing region 512 as description inscriptions 504 in the control document 501 in Fig.15. In Fig.15, the two punched holes indicates an image output setting in which the compound machine functions as a copier and the like. The number of the punched holes corresponds to a function such as a copier, a printer, a scanner, or a facsimile. The above-mentioned control document is suitable, for example, for people with visual impairments. To make the present invention more useful, the compound machine 101 may provide various voice guidance. In the third embodiment, the control for the touch panel 311 is performed by the process of the OCS 168, and the control for the MEM-P 231, MEM-C 232 or the HDD 233 is performed by the process of the MCS 165, and the control for the printing part 122 is performed by the ECS 164, and the process of NCS 161 provides APIs for performing data communication by the NIC 241.

In the third embodiment, processes relating to the editing screen are controlled by the top agent application 146.

Advantages of the control document is as follows.

A compound machine can output image data according to various image output settings. However, it can be considered that the number of variations of image output settings made by a personal user is small. That is, it is considered that a personal user makes the same image output setting to the compound machine in many cases. Thus, by preparing the control document corresponding to a desired image output setting for each user, the load for making the same setting from the operation panel can be decreased.

### (Personal Computer)

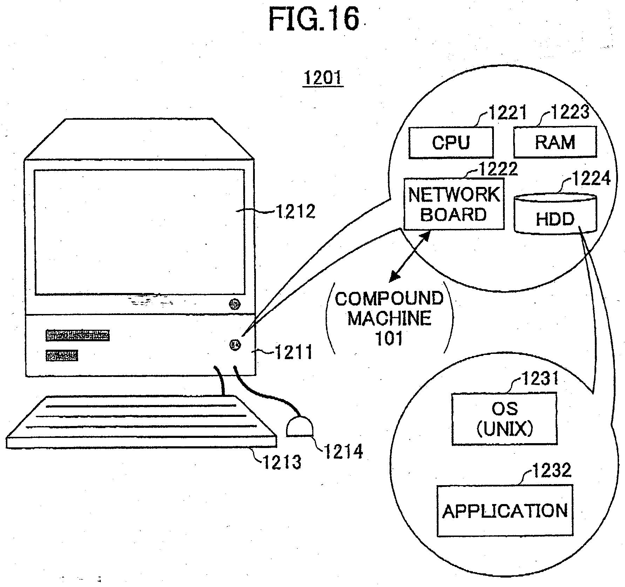

Fig.16 shows a personal computer 1201 of an embodiment of the present invention. The personal computer 1201 includes a main unit 1211, a display 1212, a keyboard 1213 and a mouse 1214.

The main unit 1211 includes a CPU 1221, a network board 1222, a RAM 1223 and a HDD 1224. The HDD 1223 stores an OS 1231 and an application 1232. The OS 1231 is UNIX for example. The application 1232 includes functions for enabling a user to edit image output setting data, sending the data to the compound machine 101 and making the compound machine 101 to print a control image corresponding to the data.

In the same way as the third embodiment, the personal computer 1201 provides an editing screen 901 same as that shown in Fig.12. The editing screen 901 provides a user interface by which image output setting data can be edited by using the keyboard 1213 and the mouse 1214. The editing screen 901 includes a function window 911, a setting window 912, a property window 913, a control document generation button 921, a form document generation button 922, a description button 923 and a user code input button 924.

The function window 911, the setting window 912, and the property window 913 are the same as those in the third embodiment. ON/OFF information for each function button, each setting button and each property button are stored in the RAM 1223.

When the control document generation button 921 is clicked, the personal computer 1201 generates a control file corresponding to the edited image output setting, and sends the file to the compound machine 101. The compound machine 101 stores the control file and prints control image data (information corresponding to the image output setting data number) so as to generate a control document. Alternatively, the personal computer may generate the control image data and send the data to the compound machine 101 for printing.

In an unclaimed example, where the control file is not used, the personal computer 1201 sends image output setting data or corresponding control image data to the compound machine 101 for printing. In this case, a general printer can be used instead of the compound machine 101 for printing the data.

When the form document generation button 922 is clicked, the personal computer 1201 obtains form image data stored in the HDD 1224, and sends the data to the compound machine 101 by using the network board. The compound machine 101 generates a form document.

The description button 923 includes a print button, a punch button and a braille button. Each of the print button, the punch button and the braille button is the same as that of the third embodiment. ON/OFF information for each button is stored in the RAM 1223.

If the control document generation button 921 is clicked in a state where the print button is on, the personal computer 1201 includes the description image data in the control file, and sends the file to the compound machine 101. The compound machine 101 generates a control document on which the description image is drawn.

If the control document generation button 921 is clicked in a state where the punch button is on, the personal computer 1201 includes description inscription data in the control file, and sends the file to the compound machine 101. The compound machine 101 generates a control document on which punch holes are inscribed.

If the control document generation button 921 is clicked in a state where the braille button is on, the personal computer 1201 includes description inscription data in the control file, and sends the file to the compound machine 101. The compound machine 101 generates a control document on which braille inscription are inscribed.

In the above-mentioned examples, instead of sending the control file to the compound machine 101 via a network, the control file may be stored in an IC cards such as an SD card to store the control file into the compound machine by using the IC card.

The processes relating to the editing screen 901 are controlled by the application 1232. The application 1232 provides the user interface for editing the image output setting data. For instructing the compound machine 101 to print data, the application 1232 may include a program similar to a printer driver for the compound machine 101.

Each of the applications described in the embodiments can be stored in a computer readable recording medium (CD-ROM, DVD-ROM, IC card and the like), and the recording medium can be distributed. In addition, the applications can be distributed via a network.

As mentioned above, according to the present invention, an image forming apparatus is provided, in which image forming apparatus includes: a document setting part for setting documents; an image input part for obtaining pieces of image data from the documents; and an image output part for printing or sending at least a piece of the image data, wherein, if a piece of image data obtained from a predetermined document in the documents is control image data, the image forming apparatus prints or sends pieces of image data of the documents other than the predetermined document according to an image output setting that corresponds to the control image data by using the image output part.

According to the present invention, the operation for making an image output setting in the image forming apparatus can be simplified, since the operation is simply to set the predetermined document.

In the image forming apparatus, the documents set on the document setting part may be set on the document setting part simultaneously. According to the present invention, since the predetermined document and the other documents are set simultaneously, the operation for obtaining the control image data from the predetermined document and the operation for obtaining other image data from other documents can be performed at the same time, so that easy operation can be achieved.

In the image forming apparatus, the piece of the image data obtained from the predetermined document may be obtained first among the pieces of image data of the documents, and each of the pieces of image data of the documents other than the predetermined document are obtained second or later. According to the present invention, the operation for making an image output setting in the image forming apparatus can be simplified.

The image forming apparatus may further includes a control file storing part for storing a control file including image output setting data, wherein, if the piece of image data obtained from the predetermined document is the control image data, the image forming apparatus obtains a control file corresponding to the control image data from the control file storing part, and prints or sends the pieces of image data of the documents other than the predetermined document according to the image output setting data in the obtained control file.

In the image forming apparatus, the control image data may include a user code, and if the user code of the control image data and a user code input into the image forming apparatus separately from the control image data are the same, the image forming apparatus prints or sends the pieces of image data of the documents other than the predetermined document according to the image output setting.

In the image forming apparatus, the control file may include a user code, and if the user code of the control file and a user code input into the image forming apparatus separately from the control file are the same, the image forming apparatus prints or sends the pieces of image data of the documents other than the predetermined document according to the image output setting.

In the image forming apparatus, the document setting part may include an automatic document feeder, and each piece of the image data to be obtained by the image input part is obtained from each document set on the automatic document feeder.

In the image forming apparatus, the document setting part may include a flatbed and an automatic document feeder, and wherein the predetermined document is set on the flatbed and the documents other than the predetermined document are set on the automatic document feeder.

In addition, the document setting part may include a flatbed and an automatic document feeder, and wherein the predetermined document is set on the flatbed and the documents other than the predetermined document are set on the automatic document feeder.

According to the present invention, an image forming apparatus is also provided, in which the image forming apparatus includes a display part and an operation part, wherein, the image forming apparatus displays an editing screen on the display part, in which the editing screen is for enabling a user to edit image output setting data by using the operation part, and the image forming apparatus prints a control image on a medium so as to generate a control document on which the control image is drawn, in which the control image corresponds to the image output setting data edited-by using the editing screen.

According to the present invention, a control document on which a control image is drawn can be generated by printing the control image on a medium, in which the control image corresponds to a desired image output setting.

In addition, an image forming apparatus is provided, in which the image forming apparatus includes a storing part for storing a form image that is used for generating a form document, wherein the form document is used for manually preparing a control document by writing, on the form document, a control image corresponding to an image output setting, wherein the image forming apparatus prints the form image on a medium so as to making the form document. According to the present invention, the control document can be generated manually.

As to the image forming apparatus, in addition to printing the control image on the medium, the image forming apparatus may print or inscribe, on the medium, a description image or a description inscription corresponding to the image output setting data so as to generate the control document including the control image, and the description image or the description inscription. The description inscription may be punch holes or Braille. According to the present invention, a control document suitable for a person with visual impairments can be provided.

In addition, according to the present invention, an information processing apparatus is provided, in which the information processing apparatus includes a display part and an operation part, wherein, the information processing apparatus displays an editing screen on the display part, in which the editing screen is for enabling a user to edit image output setting data by using the operation part, and the information processing apparatus sends data corresponding to the image output setting data edited by using the editing screen to a printing apparatus, so that the printing apparatus generates, by using the data, a control document on which a control image corresponding to the image output setting data is drawn.

According to the present invention, a control document on which a control image is drawn can be generated by printing the control image on a medium, in which the control image corresponds to a desired image output setting.

In addition, an information processing apparatus may include a storing part for storing a form image that is used for generating a form document, wherein the form document is used for manually preparing a control document by writing, on the form document, a control image corresponding to an image output setting, wherein the information processing apparatus sends the form image to a printing apparatus that generates the form document. According to the present invention, the control document can be generated manually.

As to the information processing apparatus, in addition to sending the data to the printing apparatus, the information processing apparatus sends a description image or a description inscription corresponding to the image output setting data to the printing apparatus, wherein the printing apparatus generates the control document including the control image, and the description image or the description inscription. The information processing apparatus may generate a control file including the image output setting data as the data and send the control file to the printing apparatus.

The present invention is not limited to the specifically disclosed embodiments, and variations and modifications may be made without departing from the scope of the present invention.

## Claims

1. An image forming apparatus comprising:
a document setting part (301) for setting documents;
an image input part (121) for obtaining image data from documents set on said document setting part;
an image output part (122, 144, 145) for printing or sending at least a part of the image data obtained from said documents;
a control file storing part (233) for storing at least one control file (701) including image output settings data;
a controller (201) operable if a part of the image data obtained from a predetermined document included in said documents is a control image to retrieve a control file from said control file storing part corresponding to said control image and to control said image output part to output at least a part of said image data other than image data of said predetermined document in accordance with the image output settings data of the retrieved control file;
wherein the image forming apparatus prints a control image on a medium so as to generate said predetermined document on which the control image is drawn; and
wherein each control file uniquely corresponds to a control image and the control file corresponding to a control image can be obtained from information (711, 714) indicated on the control image;
**characterized in that** one of the control image data and the control file includes a user code, and if the user code of the control image data or the control file and a user code input into the image forming apparatus separately from the control image data are the same, the image forming apparatus outputs at least a part of said image data other than image data of said predetermined document in accordance with the image output settings data.

2. An image forming apparatus according to claim 1 wherein the document setting part includes a flatbed (322) and an automatic document feeder (321) and wherein the predetermined document is set to the flatbed (322) and the documents other than the predetermined document are set to the automatic document feeder (321).

3. An image forming method using an image forming apparatus, the method comprising:
setting documents to a document setting part (301) of said image forming apparatus;
obtaining image data from documents set on said document setting part;
printing or sending at least a part of the image data obtained from said documents;
storing at least one control file (701) including image output settings data; and
if a part of the image data obtained from a predetermined document included in said documents is a control image, retrieving a control file corresponding to said control image and outputting at least a part of said image data other than image data of said predetermined document in accordance with the image output settings data of the retrieved control file;
wherein the image forming apparatus prints a control image on a medium so as to generate said predetermined document on which the control image is drawn; and
wherein each control file uniquely corresponds to a control image and the control file corresponding to a control image can be obtained from information (711, 714) indicated on the control image;
**characterized in that** one of the control image data and the control file includes a user code, and if the user code of the control image data and a user code input into the image forming apparatus separately from the control image data are the same, outputting at least a part of said image data other than image data of said predetermined document in accordance with the image output settings data.

4. An image forming method according to claim 3, wherein the document setting part includes a flatbed (322) and an automatic document feeder (321) and wherein the predetermined document is set to the flatbed (322) and the documents other than the predetermined document are set to the automatic document feeder (321).

5. A computer program comprising program code means that, when executed on an image forming apparatus, instructs the image forming apparatus to perform a method according to any one of claims 3 and 4.

## Patentansprüche

1. Bildgebungsvorrichtung, umfassend:
ein Dokumenteneinstellungsteil (301) zum Einstellen von Dokumenten;
ein Bildeingabeteil (121) zum Erhalten von Bilddaten von Dokumenten, die auf dem Dokumenteneinstellungsteil eingestellt sind;
ein Bildausgabeteil (122, 144, 145) zum Drucken oder Senden mindestens eines Teils der von den Dokumenten erhaltenen Bilddaten;
ein Steuerdateispeicherteil (233) zum Speichern mindestens einer Steuerdatei (701), einschließlich Bildausgabeeinstellungsdaten;
eine Steuervorrichtung (201), bedienbar, wenn ein Teil der von einem festgelegten Dokument, das in den Dokumenten eingeschlossen ist, erhaltenen Bilddaten ein Steuerbild zum Abrufen einer Steuerdatei vom Steuerdateispeicherteil ist, entsprechend dem Steuerbild und zum Steuern des Bildausgabeteils zum Ausgeben mindestens eines Teils der Bilddaten, die nicht Bilddaten des vorbestimmten Dokuments sind, in Übereinstimmung mit den Bildausgabeeinstellungsdaten der abgerufenen Steuerdatei;
wobei die Bildgebungsvorrichtung ein Steuerbild auf einem Medium ausdruckt, so dass das vorbestimmte Dokument erzeugt wird, auf dem das Steuerbild gezeichnet wird; und
wobei jede Steuerdatei eindeutig einem Steuerbild entspricht und die Steuerdatei, die einem Steuerbild entspricht, von Informationen (711, 714) erhalten werden kann, die auf dem Steuerbild angezeigt werden;
**gekennzeichnet dadurch, dass** eine der Steuerbilddaten und der Steuerdatei einen Benutzercode umfasst und wenn der Benutzercode der Steuerbilddaten oder der Steuerdatei und eine Benutzercodeeingabe in die Bildgebungsvorrichtung separat von den Steuerbilddaten gleich sind, gibt die Bildgebungsvorrichtung mindestens einen Teil der Bilddaten aus, die nicht die Bilddaten des vorbestimmten Dokuments sind, in Übereinstimmung mit den Bildausgabeeinstellungsdaten.

2. Bildgebungsvorrichtung nach Anspruch 1, wobei das Dokumenteneinstellungsteil ein Flachbett (322) und eine automatische Dokumentenzuführung (321) umfasst und wobei das vorbestimmte Dokument auf das Flachbett (322) eingestellt ist und die Dokumente, außer das vorbestimmte Dokument, auf die automatische Dokumentenzuführung (321) eingestellt sind.

3. Bildgebungsverfahren unter Verwendung einer Bildgebungsvorrichtung, das Verfahren umfassend:
Einstellen von Dokumenten zu einem Dokumenteneinstellungsteil (301) der Bildgebungsvorrichtung;
Erhalten von Bilddaten von Dokumenten, die auf dem Dokumenteneinstellungsteil eingestellt sind;
Drucken oder Senden von zumindest einem Teil der von den Dokumenten erhaltenen Bilddaten;
Speichern mindestens einer Steuerdatei (701), einschließlich Bildausgabedaten; und
wenn ein Teil der von einem vorbestimmten Dokument, das in den Dokumenten enthalten ist, erhaltenen Bilddaten ein Steuerbild ist, Abrufen einer Steuerdatei, die dem Steuerbild entspricht und Ausgeben mindestens eines Teils der Bilddaten, die keine Bilddaten des vorbestimmten Dokuments sind, in Übereinstimmung mit den Bildausgabeeinstellungsdaten der abgerufenen Steuerdatei;
wobei die Bildgebungsvorrichtung ein Steuerbild auf einem Medium ausdruckt, so dass das vorbestimmte Dokument, auf dem das Steuerbild gezeichnet wird, erzeugt wird; und wobei jede Steuerdatei eindeutig einem Steuerbild entspricht und die Steuerdatei, die einem Steuerbild entspricht, von Informationen (711, 714) erhalten werden kann, die auf dem Steuerbild angezeigt werden;
**gekennzeichnet dadurch, dass** eines der Steuerbilddaten und der Steuerdatei einen Benutzercode umfasst und wenn der Benutzercode der Steuerbilddaten und eine Benutzercodeeingabe in die Bildgebungsvorrichtung separat von den Steuerbilddaten gleich sind, Ausgabe von zumindest einem Teil der Bilddaten, die keine Bilddaten des vorbestimmten Dokuments sind, in Übereinstimmung mit den Bildausgabeeinstellungsdaten.

4. Bildgebungsverfahren nach Anspruch 3, wobei das Dokumenteneinstellungsteil ein Flachbett (322) und eine automatische Dokumentenzuführung (321) umfasst und wobei das vorbestimmte Dokument auf das Flachbett (322) eingestellt ist und die Dokumente, die nicht das vorbestimmte Dokument sind, auf die automatische Dokumentenzuführung (321) eingestellt sind.

5. Computerprogramm, umfassend Programmcodemittel, die, wenn sie auf einer Bildgebungsvorrichtung ausgeführt werden, die Bildgebungsvorrichtung dazu anweisen, ein Verfahren nach einem der Ansprüche 3 und 4 auszuführen.

## Revendications

1. Appareil de formation d'image comprenant :
une partie de placement de document (301) destinée à placer des documents ;
une partie d'entrée d'image (121) destinée à obtenir des données d'image de documents placés sur ladite partie de placement de document ;
une partie de sortie d'image (122, 144, 145) destinée à imprimer ou envoyer au moins une partie des données d'image obtenues desdits documents ;
une partie de stockage de fichiers de contrôle (233) destinée à stocker au moins un fichier de contrôle (701) comprenant des données de réglages de sortie d'image ;
un contrôleur (201) fonctionnant si une partie des données d'image obtenues d'un document prédéterminé comprises dans lesdits documents est une image de contrôle destinée à extraire un fichier de contrôle provenant de ladite partie de stockage de fichiers de contrôle correspondant à ladite image de contrôle, et destinée à contrôler ladite partie de sortie d'image pour délivrer en sortie au moins une partie desdites données d'image autres que les données d'image dudit document prédéterminé conformément aux données de réglages de sortie d'image du fichier de contrôle extrait ;
dans lequel l'appareil de formation d'image imprime une image de contrôle sur un support de façon à générer ledit document prédéterminé sur lequel l'image de contrôle est dessinée ; et
dans lequel chaque fichier de contrôle correspond de manière unique à une image de contrôle et le fichier de contrôle correspondant à une image de contrôle peut être obtenu à partir d'informations (711, 714) indiquées sur l'image de contrôle ;
**caractérisé en ce que** l'une des données d'image de contrôle et du fichier de contrôle comprend un code utilisateur, et si le code utilisateur des données d'image de contrôle ou du fichier de contrôle et un code utilisateur entré dans l'appareil de formation d'image séparément des données de l'image de contrôle sont les mêmes, l'appareil de formation d'image délivre en sortie au moins une partie desdites données d'image autres que les données d'image dudit document prédéterminé conformément aux données de réglages de sortie d'image.

2. Appareil de formation d'image conformément à la revendication 1, dans lequel la partie de placement de document comprend un plateau (322) et un chargeur automatique de documents (321) et dans lequel le document prédéterminé est placé sur le plateau (322) et les documents autres que le document prédéterminé sont placés dans le chargeur automatique de documents (321).

3. Procédé de formation d'image au moyen d'un appareil de formation d'image, le procédé comprenant :
le placement de documents dans la partie de placement de document (301) dudit appareil de formation d'image ;
l'obtention de données d'image de documents placés sur ladite partie de placement de document ;
l'impression ou l'envoi d'au moins une partie des données d'image obtenues desdits documents ;
le stockage d'au moins un fichier de contrôle (701) comprenant des données de réglages de sortie d'image ; et
si une partie des données d'image obtenues d'un document prédéterminé comprises dans lesdits documents est une image de contrôle, l'extraction d'un fichier de contrôle correspondant à ladite image de contrôle et la sortie d'au moins une partie desdites données d'image autres que les données d'image dudit document prédéterminé conformément aux données de réglages de sortie d'image du fichier de contrôle extrait ;
dans lequel l'appareil de formation d'image imprime une image de contrôle sur un support de façon à générer ledit document prédéterminé sur lequel l'image de contrôle est dessinée ; et
dans lequel chaque fichier de contrôle correspond de manière unique à une image de contrôle et le fichier de contrôle correspondant à une image de contrôle peut être obtenu à partir d'informations (711, 714) indiquées sur l'image de contrôle ;
**caractérisé en ce que** l'une des données de l'image de contrôle et du fichier de contrôle comprend un code utilisateur, et si le code utilisateur des données d'image de contrôle et un code utilisateur entré dans l'appareil de formation d'image séparément des données d'image de contrôle sont les mêmes, la sortie d'au moins une partie desdites données d'image autres que les données d'image dudit document prédéterminé conformément aux données de réglages de sortie de l'image.

4. Procédé de formation d'image conformément à la revendication 3, dans lequel la partie de placement de document comprend un plateau (322) et un chargeur automatique de documents (321) et dans lequel le document prédéterminé est placé sur le plateau (322) et les documents autres que le document prédéterminé sont placés dans le chargeur automatique de documents (321).

5. Programme informatique comprenant un moyen de code de programme qui, lorsqu'il est exécuté dans un appareil de formation d'image, donne des instructions à l'appareil de formation d'image pour mettre en oeuvre un procédé conformément à l'une quelconque des revendications 3 et 4.
